# EUROPEAN PATENT SPECIFICATION

(11) **EP 0 662 433 B1**
(45) Date of publication and mention of the grant of the patent: **02.05.1997**
(21) Application number: 94100178.6
(22) Date of filing: 07.01.1994
(51) Int. Cl.: B65G 17/34

(54) **Handling-switching apparatus**
Förder- und Schaltvorrichtung
Dispositif de manutention et de commutation

(43) Date of publication of application: 12.07.1995
(73) Proprietor: ELECTRONIC SYSTEMS S.P.A., I-28015 Momo (No) (IT)
(72) Inventor: Masotti, Alessandro, I-28040 Lesa No (IT)
(74) Representative: La Ciura, Salvatore

(56) References cited:
- EP-A- 0 556 866
- DE-A- 2 007 439
- US-A- 4 938 335

## Description

This invention proposes a handling-switching apparatus including a number of carriages, each one fitted with a rotating carpet that constitutes the conveyor table of the piece to be handled, in which each carriage is provided with a motor to operate the carpet, a motor to control the carriage inclination and a CPU which is fed and receives signals through wires embedded in the carriages dragging belts and the function of which is to manage the unloading operations according to the signals received.

The collecting devices are placed below the carriages and unloading takes place by inclining each carriage and by setting in action the carpet, when the same comes to pass in correspondence with the collector that is assigned to each piece by means of a proper code, when the piece is loaded onto the machine.

The carriage dragging belts are provided with contacts that engage corresponding contacts placed on the driving wheels; the main power supply reaches such contacts through brushes which engage as many collectors mounted on such driving wheels shaft.

The number of sliding contacts utilized is by this way reduced, as well as their speed.

Handling-switching systems in which the conveying devices are constituted by carriages, each one of which is fitted with a rotating carpet on which the piece to be transported is placed and that is driven to discharge the piece when it comes to pass in correspondence with the assigned collecting devices, are known.

In such known systems, in which the carriages move at a speed of one or two meters per second, the power supply of the carpets' and relevant controls' driving motors is obtained by means of brushes that collect the current from feeding bars placed along the carriage path.

These machines include continuous bars for the power supply transmission and discontinuous bars to transmit control signals.

This known solution (see, for example, EP-A-0 556 866) involves however remarkable problems due on one side to an extremely complex arrangement, since it is necessary to provide a considerable number of wires, depending on the number of carriages present in the system (sometimes even some hundreds) and, on the other side, owing to the sparking caused by sliding contacts, specifically in the discontinuity sections of the feeding bars.

Moreover, in case of machines in which the carriage path develops on a vertical plane, for instance a loop, when the carriages pass from the lower to the upper section and conversely, since the same are tied to the dragging chains they overturn and this forces unloading to take place before each carriage passes from one to another section of the path.

The present invention as defined in the characterising portion of claim 1 proposes now a handling-switching device which makes it possible to avoid the abovementioned problems. The device according to the invention includes a number of carriages that are all provided with a rotating carpet with a shaft connected to a pair of belts to which the task is assigned of dragging the carriages.

On board of each carriage a motor is fitted that, by acting on a gearwheel integrally connected with the supporting shaft, at the moment of unloading sets the carriage to an inclined position; a second motor also fitted on board sets the carpet to rotation.

The electronic control devices of such motors are also present on board of the carriages.

Both the motors and the relevant controls are fed by means of wires that run along the belts and, as will be evident from the description that follows, are fed by contacts fitted to the chain driving wheels.

The latter contacts are connected to as many collectors mounted on the shaft of said wheels, which are in turn fed by brushes.

The invention will now be described in detail, as a non-limiting example, referring to the attached figures, where:
Figure 1 is a schematic perspective view of the handling-switching apparatus according to the invention;
Figure 2 schematically shows one of the carriage dragging belts with the relevant contacts;
Figure 3 is the schematic perspective view of a carriage;

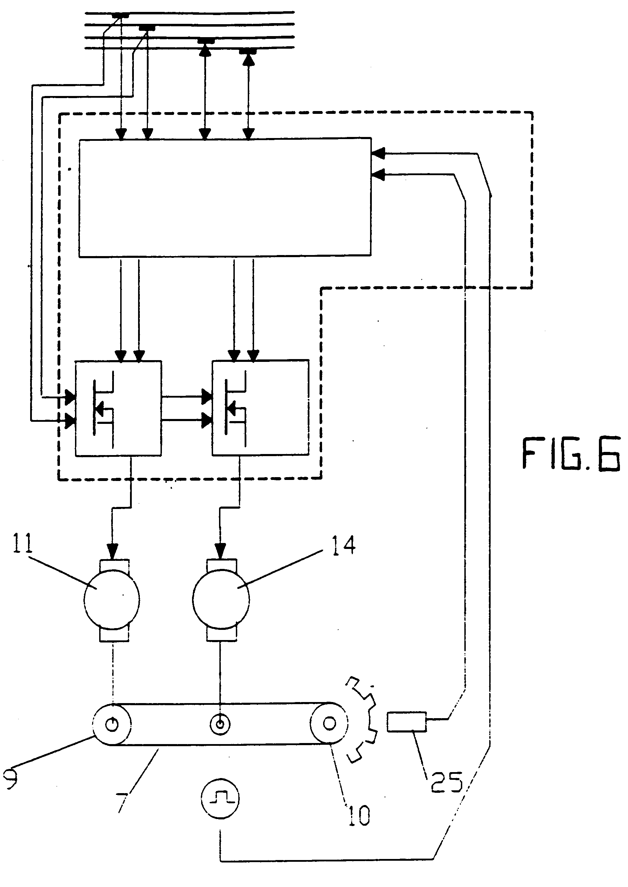

Figures 4 and 5 schematically show a carriage in two different positions it can take, to carry out the piece unloading;
Figure 6 is the electric diagram, showing the devices installed on board of each carriage.

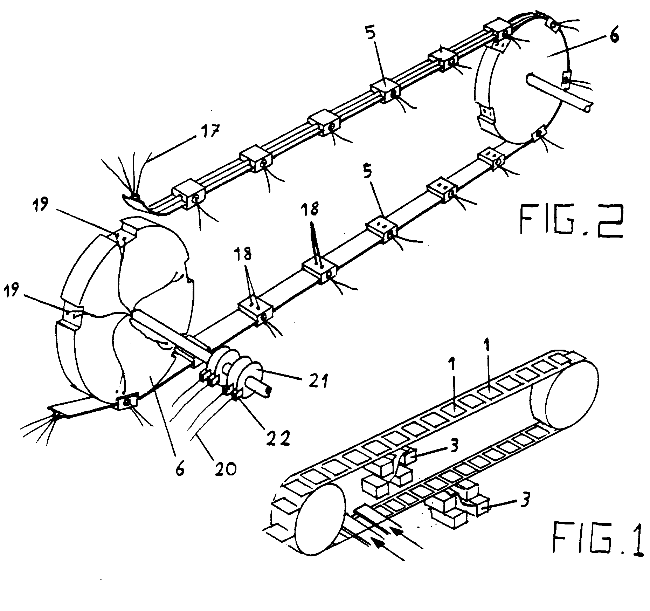

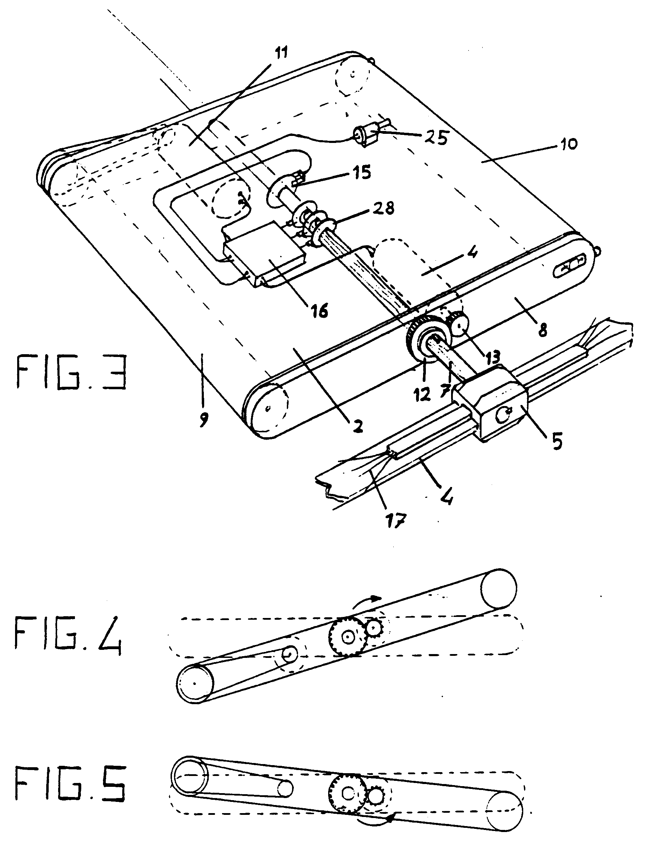

With reference to figure 1, the machine according to the invention includes a number of carriages, each one of which is indicated in its whole by 1, on which a rotating carpet 2 (figure 3) is mounted, that constitutes the piece conveying and unloading table; the pieces are unloaded into collecting vessels 3 placed below the carriage path. The machine shall preferably comprise, like in the example described hereinbelow, two rows of carriages disposed side by side, which move along a loop developing on a vertical plane.

It is anyway clear that the same solution may apply to machines having a path developing on an horizontal plane, without thereby departing from the scope of the invention.

Each carriage is dragged by a belt, indicated by numeral 4 in figures 2 and 3, to which a series of blocks 5 are fixed and blocks engaging the corresponding seatings provided for in a couple of wheels 6, on which belts 4 are mounted.

The carriage frame has, preferably in correspondence with the central zone, a supporting shaft 7 that is rigidly tied at both extremities to as many blocks 5 of belts 4.

An electric motor, not shown in the figure, sets to rotation the wheels 6, which engage blocks 5 and so drag belts 4 and, at the same time, the carriages.

The rotation of wheels 6 is constantly monitored by an encoder, not shown in the figure, mounted for instance on the shaft of wheels 6.

Every carriage includes a frame indicated by numeral 8, on which a driving drum 9 and an idle tension roller 10 are mounted.

Drum 9 is set to rotation by an electric motor 11.

A gearwheel 12 is also integrally connected with shaft 7, on which a pinion 13 of a second electric motor 14, also mounted on board of the carriage, engages.

An encoder 15 is then applied to shaft 7 and an electronic control unit 16, of a known type, is present, that controls motors 11 and 14 and receives the signal generated by encoder 15.

Finally, a collector indicated by 28 is also connected to shaft 7, to which the contacts are fixed that feed motors 11 and 14, besides the CPU and the various electronic devices present on the carriage.

All handling-switching apparatus functions are managed, in a way that is per se known, by a central computer not shown in the figure.

To send to every carriage the power supply necessary to motors 11 and 14 and the signals that the computer sends to control 16, four cables are necessary, indicated by numeral 17 in the different figures, which run along belts 4.

Inside each block a shunt is therefore present, that allows to draw the power supply and the signals of cables 17, to transmit it to the devices present on the carriage.

To this aim every block 5 is provided, in its lower part, with a couple of electric contacts 18 that engage contacts 19 in the corresponding seatings of wheels 6.

Contacts 19 are connected, by means of cables 20, to as many collectors 21 on which the feeding brushes 22 slide.

In the seatings of wheels 6 at least 5 or 6 blocks are present at any time, by means of which a continuous connection between brushes 22 and cables 17, that feed the carriages, is obtained through contacts 18 and 19.

It is therefore clear that the relative speed between brushes 22 and collectors 21, that constitute the only sliding contacts present in the machine, is extremely lower than the forward carriage movement speed, since it depends on the collector diameters only.

It is by this way possible to provide contacts that move at the speed of a few centimeters per second, while on the contrary the carriages move at a speed of one meter per second or more.

Motor 14 is utilized, besides for placing in inclined position the carriages at the moment of unloading, also to compensate for the rotation of shaft 7 when the carriage passes from the upper to the lower section of its path, keeping by this way the carpet at any time in the horizontal position.

To this aim it is necessary that the CPU on board of the carriage be constantly informed on both the carriage absolute position along the path and the piece destination and its unloading mode.

These pieces of information reach the CPU through two wires of cabling 17.

The invention specifically states that the signal proceeding from the machine's encoder shall flow on one of such wires, while the second wire shall be utilized for a serial connection between the CPU and the central computer, that shall inform the CPU of the piece destination and the unloading mode (that shall be determined according to the piece weight, dimensions etc.).

Such wire shall furthermore be utilized to send to the central computer a control signal, being generated for instance by a sensor 25, such as a magnetic sensor or the like, sensing the carpet's idle roller rotation, in which some metal pieces are embedded according to a technique per se known.

The operation takes place as follows:
the pieces are suitably coded then placed on the carriages, that shall move for instance according to arrow A of figure 1.

The CPU of each carriage is constantly informed, by means of the signals generated by the encoder connected to wheels 6 and transmitted through one of wires 17, on the position along the path and, when the carriage comes to pass above the collecting devices assigned to the transported piece, it sends the unloading command.

Information on the assigned destination reaches the CPU through cables 17, together with the information on unloading mode, that shall be determined according to the transported piece's characteristics.

For instance, a series of unloading curves can be stored into the CPU, that the CPU will select case by case, in accordance with the information on the type of piece received through serial connection 17.

At the moment of unloading the CPU sets to action motor 14 that sets to rotation pinion 13 which engages gearwheel 12, causing the carriage to be inclined and bringing it, for instance, to the position of figure 4.

The carriage angular shifting is detected by encoder 15, the signal of which reaches control 16 that stops the operation of motor 14 when the required inclination is reached.

At this stage the control sets to action motor 11, causing carpet 2 to rotate at controlled speed and acceleration; the carpet unloads the piece that falls into the collecting vessel below.

Once the unloading operation is over, motor 11 stops moving and motor 14 is set to action again, in order to take the carriage to the horizontal position again.

Motor 14 is then set to action again when the carriage comes to pass in correspondence of wheel 6, in order to keep the carpet in the horizontal position while it goes from the upper to the lower section of its path or conversely and the CPU shall autonomously decide when to start setting motor 14 to action, according to the position of the carriage along its path, as detected by means of the signal generated by the machine's main encoder.

Furthermore sensor 25 shall check the actual rotation of the carpet supporting roller, sending to the main computer a control signal through wires 17.

A skilled person will be able to plan many modifications and changes, which are comprised within the scope of this invention, as defined by the claims.

## Claims

1. A handling-switching apparatus including a number of carriages each one of which is provided with a rotating carpet that constitutes the transport and unloading table of the pieces, every carriage being dragged by a pair of belts (4) driven by driving wheels (6) and being fitted with driver means (11) to perform unloading and with electronic devices (16) that control the said motors, characterized by wires (17) running along said belts, to provide power supply to said driver means.

2. A handling-switching apparatus according to claim 1, characterized by including also on every carriage a motor (14) suitable to place said carriage in an inclined position for unloading purposes.

3. A handling-switching apparatus according to claim 2, characterized in that every carriage is provided with a shaft connected to said belts, said motor (14) that controls the carriage inclination operating a pinion that engages a fixed gearwheel integrally connected with said shaft.

4. A handling-switching apparatus according to claim 3, characterized by including, mounted on said shaft (7), an encoder connected to the control devices of the said motor (14).

5. An apparatus as claimed in the preceding claims, characterized by including, in said driving wheel (6), a series of superficial electric contacts (19) suitable to engage corresponding contacts (18) present on the belt or on the blocks (5) of the same to transmit power supply to the carriages through cables running along the said belt.

6. An apparatus as claimed in claim 5, characterized in that said contacts present on the driving wheel (6) are connected to a collector (21) mounted on the shaft of said driving wheel, said collector receiving its power supply by means of brushes (22).

7. An apparatus as claimed in the preceding claims, characterized by including means suitable to keep the carriages in an horizontal position when the same pass from the upper to the lower section of their path.

8. An apparatus as claimed in claim 7, in which said means consist of the same motor that places the carriage in an inclined position for unloading purposes.

## Patentansprüche

1. Handhabungs-Schaltvorrichtung mit einer Anzahl von Wägen, von denen jeder mit einem Drehförderband ausgestattet ist, welches den Transport- und Entladetisch der Stücke bildet, wobei jeder Wagen mittels eines Paars Riemen (4) angetrieben wird, die durch Antriebsräder (6) angetrieben werden und mit Antriebseinrichtungen (11) zum Durchführen des Entladens und mit elektronischen Vorrichtungen (16), welche Motoren steuern, bestückt sind, gekennzeichnet durch Drähte (17), welche entlang der Riemen verlaufen, um die Antriebseinrichtungen mit Strom zu versorgen.

2. Handhabungs-Schaltvorrichtung nach Anspruch 1, dadurch gekennzeichnet, daß sie auf jedem Wagen ebenfalls einen Motor (14) enthält, der geeignet ist, den Wagen in eine geneigte Stellung zum Zwecke des Entladens zu bringen.

3. Handhabungs-Schaltvorrichtung nach Anspruch 2, dadurch gekennzeichnet, daß jeder Wagen mit einer mit den Riemen verbundenen Welle ausgestattet ist, wobei der Motor (14), der die Wagenneigung steuert, ein Ritzel betreibt, das mit einem feststehenden Zahnrad in Eingriff ist, welches mit der Welle einstückig verbunden ist.

4. Handhabungs-Schaltvorrichtung nach Anspruch 3, dadurch gekennzeichnet, daß sie eine auf der Welle (7) befestigte Codiervorrichtung enthält, die mit den Steuerungsvorrichtungen des Motors (14) verbunden ist.

5. Vorrichtung nach einem der vorhergehenden Ansprüche, dadurch gekennzeichnet, daß sie in dem Antriebsrad (6) eine Reihe oberflächlicher elektrischer Kontakte (19) enthält, die geeignet sind, um mit entsprechenden Kontakten (18) in Eingriff zu kommen, die auf dem Riemen oder auf den Blöcken (5) desselben vorhanden sind, um durch die entlang des Riemens verlaufenden Kabel Stromversorgung auf die Wägen zu übertragen.

6. Vorrichtung nach Anspruch 5, dadurch gekennzeichnet, daß die auf dem Antriebsrad (6) vorhandenen Kontakte mit einem Kollektor (21) verbunden sind, der auf der Welle des Antriebsrades befestigt ist, wobei der Kollektor seine Stromversorgung mittels Bürsten (22) erhält.

7. Vorrichtung nach einem der vorhergehenden Ansprüche, dadurch gekennzeichnet, daß sie eine Einrichtung enthält, die geeignet ist, um die Wägen in einer horizontalen Stellung zu halten, wenn sie sich von dem oberen zu dem unteren Abschnitt ihres Weges bewegen.

8. Vorrichtung nach Anspruch 7, dadurch gekennzeichnet, daß die Einrichtung aus demselben Motor besteht, der den Wagen in eine geneigte Stellung für Entladezwecke bringt.

## Revendications

1. Dispositif de manutention et de commutation comprenant un certain nombre de chariots dont chacun est pourvu d'un tapis rotatif qui constitue la table de transport et de déchargement des pièces, chaque chariot étant tiré par une paire de courroies (4) entraînées par des roues (6) motrices et étant équipées de moyens (11) d'entraînement pour effectuer le déchargement et de dispositifs (16) électroniques qui contrôlent lesdits moteurs, caractérisé par des fils (17) qui courent le long desdites courroies pour fournir une alimentation auxdits moyens d'entraînement.

2. Dispositif de manutention et de commutation selon la revendication 1, caractérisé en ce qu'il comprend aussi sur chaque chariot un moteur (14) convenant pour placer ledit chariot dans une position inclinée à des fins de déchargement.

3. Dispositif de manutention et de commutation selon la revendication 2, caractérisé en ce que chaque chariot est pourvu d'un arbre connecté auxdites courroies, ledit moteur (14) qui contrôle l'inclinaison des chariots commandant un pignon qui enclenche une roue de transmission fixe intégralement connectée audit arbre.

4. Dispositif de manutention et de commutation selon la revendication 3, caractérisé en ce qu'il comprend, monté sur ledit arbre (7), un encodeur connecté aux dispositifs de contrôle dudit moteur (14).

5. Appareil selon les revendications précédentes caractérisé en ce qu'il comprend, dans ladite roue (6) motrice, une série de contacts (19) électriques superficiels convenant pour enclencher les contacts (18) correspondants présents sur la courroie ou sur les blocs (5) de celle-ci pour transmettre l'alimentation aux chariots par des câbles courant le long de ladite courroie.

6. Appareil selon la revendication 5, caractérisé en ce que lesdits contacts présents sur la roue (6) motrice sont connectés à un collecteur (21) monté sur l'arbre de ladite roue motrice, ledit collecteur recevant son alimentation au moyen de balais (22).

7. Appareil selon les revendications précédentes, caractérisé en ce qu'il comprend des moyens convenant pour garder les chariots dans une position horizontale quand ceux-ci passent de la section supérieure à la section inférieure de leur trajectoire.

8. Appareil selon la revendication 7, dans lequel lesdits moyens consistent en le même moteur qui place le chariot dans une position inclinée à des fins de déchargement.
